# EUROPEAN PATENT SPECIFICATION

(11) **EP 3 695 458 B1**
(45) Date of publication and mention of the grant of the patent: **04.05.2022**
(21) Application number: 18786441.8
(22) Date of filing: 05.10.2018
(51) Int. Cl.: H01Q 1/32, F16B 7/04, H01Q 1/12, F16B 2/06, F16B 2/12

(54) **ADJUSTABLE ANTENNA MOUNTING SYSTEM**
EINSTELLBARES ANTENNENMONTAGESYSTEM
SYSTÈME DE MONTAGE D'ANTENNE RÉGLABLE

(30) Priority: 09.10.2017 SE 1751248
(43) Date of publication of application: 19.08.2020
(73) Proprietor: Oxyfi AB, 116 41 Stockholm (SE)
(72) Inventor: LARSSON, Håkan, 129 35 Hägersten (SE); ROSENBAUM, Filip, 132 44 Saltsjö-Boo (SE)
(74) Representative: Bergenstråhle & Partners AB
(86) International application number: PCT/SE2018/051028
(87) International publication number: WO 2019/074428

(56) References cited:
- DE-A1- 2 926 758
- US-A- 4 408 928
- US-A- 4 749 997
- US-A1- 2017 237 156
- US-B1- 9 072 771
- US-B2- 8 836 590

## Description

### Technical field

The present invention relates generally to radio communication between vehicles and shore and more specifically to an antenna mounting system to enable radio communication between vehicles and shore.

### Background art

Some IT-applications onboard vehicles require one or more roof-mounted antennas to acquire a sufficient level of service. One example of such an application is providing a wireless local area network (WLAN), often called Wi-Fi, to passengers on large vehicles such as e.g. trains or buses.

Installing rooftop antennas on vehicles is an arduous task. One of the major challenges of such installations is to find a suitable spot on the roof that has a free line of sight in as many directions as possible and also allows for antenna cabling to be routed into the vehicle as well as allowing free space underneath for bolting. This combination of desirable characteristics of the installation site often leads to unwanted limitations in the maximum number of antennas, which results in a suboptimal level of service.

Another challenge is the time-consuming installation of individual antennas where each antenna needs its own bolting and cable entry into the vehicle. In a fleet of train vehicles, it is common with individual variations, which can require re-engineering of the antenna placement or a reduction of the number of antennas. Mounting of antenna systems on a fleet of railway vehicles is a critical part of the installation. If it fails or becomes sub-optimal, it can result in severe installation delays and penalties. Also, in order to mount an antenna on the vehicle roof, a number of holes need to be made for bolts and cabling. Every such hole introduces a risk for water leaks.

Today it is widespread practice to mount the antennas on a metal beam that in turn is mounted on the vehicle roof. Cabling is bundled together in the beam and typically routed through one or more bushings into the vehicle body. The beams are typically designed as a one-piece construction where the beam, the grounding fixture and where the cable bundle is routed from the beam are statically designed, manufactured, and delivered for installation. To fasten the beam to the roof, the beam may have mounting flanges running along the length of the beam, which are then bolted to the roof. Other designs include "legs" welded onto the beam at regular intervals.

US 9,072,771 B1 discloses an antenna array having multiple antenna elements mountable to the roof of a locomotive. Each of the antenna elements has a separate signal path of one or more conductive elements in a housing and shares a common hole or opening to outside the housing through which the signal path of each antenna element is extendable. The signal path of each antenna element then extends via a common access hole in the roof of the locomotive for enabling one or more of passage of signals to or from the antenna element. The access hole is below the array when the common hole is along the bottom of the housing, and elsewhere along the roof when the common hole is along a side of the housing.

US 8,836,590 B2 discloses an antenna array for a body panel of a locomotive having a base support including at least a pair of elongated parallel structures forming a channel on the body panel of the locomotive cab. A plurality of removable plates are affixed to the elongated parallel structures for mounting an antenna on each of the removable plates, thereby allowing wiring from each antenna to extend from its respective removable plate through the channel formed by the base support. A junction box situated near the base support forms an enclosure about an aperture formed in the body panel of the locomotive. The junction box includes a plurality of interconnects for connecting wiring of each antenna to wiring of a device in the locomotive.

US 4,408,928 discloses a rectangular channel member having coplanar spaced-apart wall portions defining a slot therebetween and each having a flange extending from the slot inwardly of the channel member and away from, the other wall portion at an acute angle. A generally U-shaped connector is disposable within the channel member across the slot and includes rectangular recesses receiving the flanges therein. A threaded fastener, engageable with the connector extends through the slot for engagement with a support member, tightening of the fastener causing deformation of the flanges by the connector for wedging the flanges in the connector recesses. The support member may constitute a bracket for coupling the channel member to another channel member, several different bracket constructions being disclosed for coupling to different types of channel members and for different orientations of the channel members.

DE2926758 Al discloses a fastening system for a tubular antenna on the roof of a vehicle.

This approach does address the problems mentioned above. However, a statically designed antenna beam introduces a number of new issues that need to be addressed to make the beam more efficient in terms of risk reduction and cost efficiency.

A beam for multiple antennas requires a beam up to several meters long, which is manufactured from very large sheets of metal (over 4 meters), that can only be done in bigger mechanical workshops. which increase both cost and lead time. Moreover, very long beams require special logistics, which drives cost.

Also, such beams often need to be custom-made for each individual vehicle, depending on the mounting conditions (obstacles, dimension, shape, site selection etc.) on the roof of the vehicle. Deviating vehicle individuals can result in a complete redesign and manufacturing of the antenna beam. Even the slightest change of the beam requires a complete rework and manufacturing, for instance, if one of the "legs" of the beam has to be moved 50 mm to work around an obstacle on one particular vehicle. This introduces the risk of delayed installation, increases cost and may incur penalties.

Different projects can have their own requirements on the optimal number of antennas. Every project needs to design completely new drawings for the beam since the requirements most likely differ from earlier projects in terms of vehicle types, the number of antennas, suitable placement, roof profile etc., which drives cost, and increases risk and lead time.

All in all, manufacture and installation of such beams requires considerable effort and case-by-case adaptation, which is expensive and time-consuming. Thus, there is a need to develop improved mounting solutions for antennas on vehicles.

### Summary of invention

The present invention aims at alleviating or eliminating the problems associated with the known beams. It is, therefore, an object of the present invention to provide an improved antenna mounting system with facilitates installation of antennas on a vehicle. This object is now achieved by an adjustable antenna mounting system according to a first aspect of the present invention, the adjustable antenna mounting system comprising at least one beam segment adapted to receive at least one antenna for mounting thereon, and at least two leg members each comprising means for fastening the leg member to the vehicle, wherein the beam segment has a substantially C-shaped cross section, each of the at least two leg members is arranged to be removably fastened to the beam segment at any longitudinal position along the length of the beam segment and dimensioned to elevate the beam segment from the surface of the vehicle when the leg members are fastened to the vehicle.

In essence, the present invention is directed to an adjustable mounting system comprising a beam segment with floating fixing points for "legs". Compared to prior art, the present invention makes it easy to adapt the antenna mounting system to deviations between vehicle individuals, simply by positioning and fastening the leg members at an optimal site along the length of the beam segment for mounting on the vehicle, e.g. on the vehicle roof. An additional advantage is that the leg members may be adapted to different obstacles on the roof, for instance changing the height of the leg portions to elevate the beam segment, whilst leaving the beam segment unaltered.

The C-shaped cross section essential turns the beam segment into a mounting rail, making it possible to design a vast number of peripherals for attachment thereto without having to modify the beam segment itself. Examples of peripherals are legs that fix the beam to the vehicle roof, cable routing fixtures that protect the antenna cabling as it is routed down into the body of the vehicle and a grounding fixture that is used to properly ground the beam to the vehicle.

In an embodiment, the beam segment cross section terminates in a pair of inwardly oriented lips, wherein the at least two leg members each comprise a bracket arranged to engage the lips of the beam segment when the leg member is fastened to the beam segment. Preferably, the at least two leg members are slidable along the lips. The bracket provides a robust but easily re-adjustable fastening of the leg member to the beam segment, simply by sliding it up or down along the beam segment.

In a preferred embodiment, the leg members comprise a top portion and a pair of side portions, each terminating in a flange. Preferably, one of the side portions has a dimension different from the other side portion. The leg members may be dimensioned for the specific mounting conditions on the roof of the vehicle, for instance, to work around obstacles or to adapt to the shape of the roof.

In an advantageous embodiment, the adjustable antenna mounting system further comprises at least one cable routing member arranged to be removably fastened to the beam segment at any longitudinal position along the length of the beam segment, wherein the at least one cable routing member comprises a bracket arranged to engage the lips of the beam segment when the at least one cable routing member is fastened to the beam segment, wherein the bracket comprises a through-going opening for passage of cables. The cable routing member may be fastened and repositioned on the beam segment in the same manner as the leg members. The through-going opening provides a single common passage for the cables of the antenna(s) from the beam segment towards the roof of the vehicle.

In a preferred embodiment, the cable routing member comprises a top portion with a central through-going hole and a bottom portion aligned with the hole, wherein the hole is aligned with the opening of the bracket when the bracket is mounted on the top portion. The bottom portion provides protection for the cable bundle routed from the beam segment and through the roof of the vehicle.

In an advantageous embodiment, the adjustable antenna mounting system further comprises at least one grounding fixture arranged to be removably fastened to the beam segment at any longitudinal position along the length of the beam segment, wherein the at least one grounding fixture comprises a bracket arranged to engage the lips of the beam segment when the at least one grounding fixture is fastened to the beam segment, wherein the grounding fixture comprises a top portion and a side portion including a through-going hole for attachment of a grounding wire. The grounding fixture may be fastened and repositioned on the beam segment in the same manner as the leg and cable routing members and provides an adaptable and reliable grounding between the beam segment and the vehicle.

In a preferred embodiment, the bracket has a substantially U-shaped cross section including a top portion and two side portions, wherein the side portions are angled with respect to the top portion. The simple construction of the bracket makes it easy and inexpensive to manufacture. The angled side portions enable the bracket to sink into the beam segment to achieve firm and rigid joint between the bracket and the beam segment.

In an advantageous embodiment, the beam segment further comprises at least one mounting plate for attachment of cable ties, arranged on an inner surface of the beam segment. The mounting plate allows for proper strapping of the cables from the antennas to the beam segment to ensure that the cables do not come loose.

In a preferred embodiment, the beam segment has a length in the range 1 to 3 metres, preferably about 2 metres. The beam segment is easy to manufacture since virtually any metal workshop can handle sheets of that size. Moreover, beam segments of this size are easy to transport and store and also enables handling by one person.

In an advantageous embodiment, the beam segment is arranged to be joined together end-to-end with another beam segment. Preferably, the adjustable antenna mounting system comprises two or more beam segments joined together end-to-end in a longitudinal direction of the beam segments. By providing a modular solution wherein more beam segments and leg members may be added to form a custom-made beam of the desired length, the present invention makes it easy to adapt the antenna beam to any number of antennas.

### Brief description of drawings

The invention is now described, by way of example, with reference to the accompanying drawings, in which:
Fig. 1 shows a perspective view of an adjustable antenna mounting according to one embodiment of the present invention;
Fig. 2 shows a cross-sectional view of a beam segment according to one embodiment of the present invention;
Figs. 3a and 3b show perspective and side views, respectively, of a leg member according to one embodiment of the present invention;
Fig. 4 shows an end view of the beam segment of Fig. 2 and the leg member of Figs. 3a and 3b mounted thereon;
Figs. 5a and 5b show perspective and side views, respectively, of a cable routing member; and
Figs. 6a and 6b show perspective and side views, respectively, of a grounding fixture.

### Description of embodiments

In the following, a detailed description of an adjustable antenna mounting system according to the invention is presented. In the drawing figures, like reference numerals designate identical or corresponding elements throughout the several figures. It will be appreciated that these figures are for illustration only and are not in any way to be seen as restricting the scope of the invention.

It is understood that the adjustable antenna mounting system may be configured to be mounted on any type of vehicle, on any suitable surface thereof. Although in the following, the adjustable antenna mounting system is described with reference to railway cars and roofs, the invention should not be seen as limited to this specific application. Instead, any type of suitable surface on a vehicle is foreseen to be used as a mounting surface for the adjustable antenna mounting system according to the present invention.

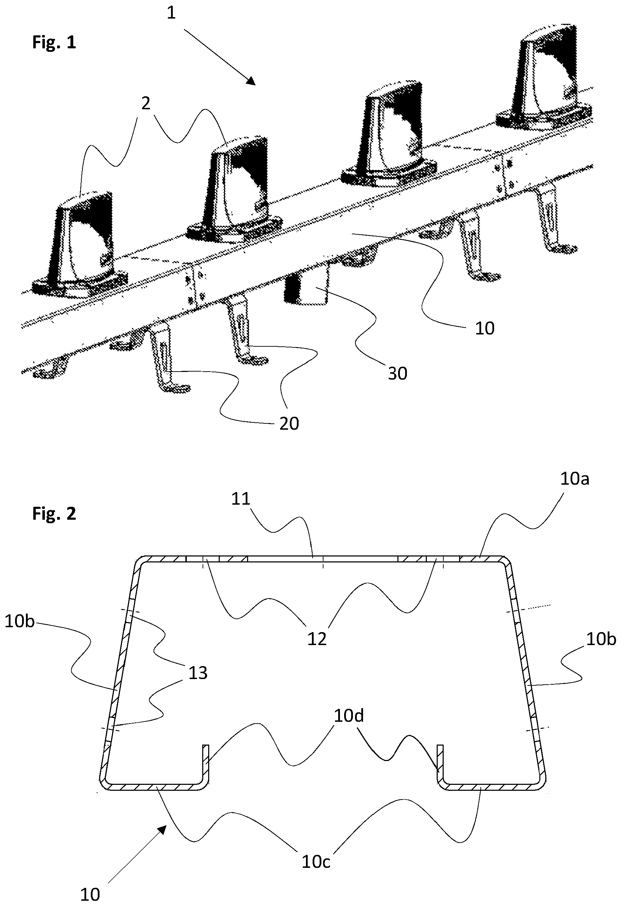

The present invention is directed to an adjustable, modularized antenna mounting system 1 as illustrated in Fig. 1 intended to be mounted on the roof of a vehicle, such as railway cars, buses, ships or even aircraft. The adjustable antenna mounting system is arranged to receive a number of antennas 2 to be attached thereon. The antennas 2 may be of any suitable make and model for sending and receiving signals over a wireless radio communication network. Such antennas 2 are normally installed on vehicles, especially railway cars, to provide a wireless network connection to passengers on a train. As discussed above, in order to provide an adequate level of service onboard the vehicle, several antennas 2 are needed, each requiring a free line of sight in as many directions as possible to provide optimal communication.

As may be seen in Fig. 1, the adjustable antenna mounting system 1 comprises a number of beam segments 10, each arranged to accommodate a number of antennas 2 thereon. In the example shown in Fig. 1, the central beam segment 10 has two antennas 2 mounted thereon. However, the number of antennas 2 can vary depending on the length of the beam segment 10 and the spacing and line-of-sight requirements of the antenna 2. Also shown in Fig. 1 is a number of removable leg members 20 and a cable routing fixture 30, which will be more discussed below.

Turning now to Fig. 2, the beam segment 10 is shown in a cross-sectional view. The beam segment is more or less symmetrical with respect to a vertical central plane and comprises a top portion 10a, a pair of opposing side portions 10b each having a flange 10c. The flanges 10c are oriented substantially parallel to the top portion 10a and terminate in a pair of inwardly oriented lips 10d, which are oriented substantially perpendicular to the flanges 10c towards the top portion 10a. The side portions 10b may be angled slightly outwardly such that the width of the beam segment 10 increases from the top portion 10a in the direction towards the flanges 10c.

In one embodiment, the beam segment 10 is made of metal with a thickness in the range 2-8 mm, preferably 3-6 mm, more preferably 4-5 mm. In one embodiment, the beam segment 10 has a width in the range 15-25 cm, preferably about 20 cm, and a height in the range 5-10 cm, preferably about 10 cm.

The beam segment 10 is designed such that the underside effectively becomes a mounting rail by means of the flanges 10c and the inwardly directed lips 10d, on which leg members 20, cable routing member(s) 30 and grounding fixture(s) 40 can be mounted. The antennas 2 are mounted on the top portion 10a and cabling is bundled and strapped inside the beam segment 10. To this end, the beam segment 10 comprises one or more mounting plates (not shown) arranged at regular intervals on the underside of the top portion 10a, i.e. inside the beam segment 10. Turning the underside of the beam segment 10 into a mounting rail makes it possible to design a vast number of peripherals without having to modify the beam segment 10 itself. Examples of peripherals are leg members 20 that fix the beam segment 10 to the vehicle roof, cable routing members 30 that protect the antenna cabling as it is routed down into the body of the vehicle and grounding fixtures 40 that are used to properly ground the beam to the vehicle.

The beam segment 10 is arranged to receive one or more antennas 2 in corresponding seats in the shape of a through-going hole 11 in the top portion 10a. When mounted, the cables and wires from the antenna 2 can then be routed along the inside of the beam segment 10. Furthermore, the beam segment 10 may include threaded or unthreaded holes 12 in the top portion 10a for fastening the antenna 2 to the beam segment 10 by means of bolts (not shown).

As shown in Fig. 1, the adjustable antenna mounting system 1 comprises several beam segments 10 connected together end-to-end in order to accommodate the desired number of antennas 2. The more antennas 2 that are required, the more beam segments 10 are added together. To this end, the beam segment 10 comprises threaded or unthreaded holes 13 in the side portions 10b adjacent the respective ends of the beam segment 10. A connection plate (not shown) may be placed against the side portions 10b in the joint between two adjacent beam segments 10 and fastened by means of bolts and nuts (not shown). In Fig. 1, the beam segment 10 has two antennas 2 mounted thereon. Of course, the beam segment 10 may be arranged to accommodate more or fewer antennas 2, depending on the desired configuration of the antenna mounting system 1 and the installation conditions on the roof of the vehicle. An end-plate (not shown) may be mounted at each end of the beam (comprising one or more beam segments 10) to "close" the ends.

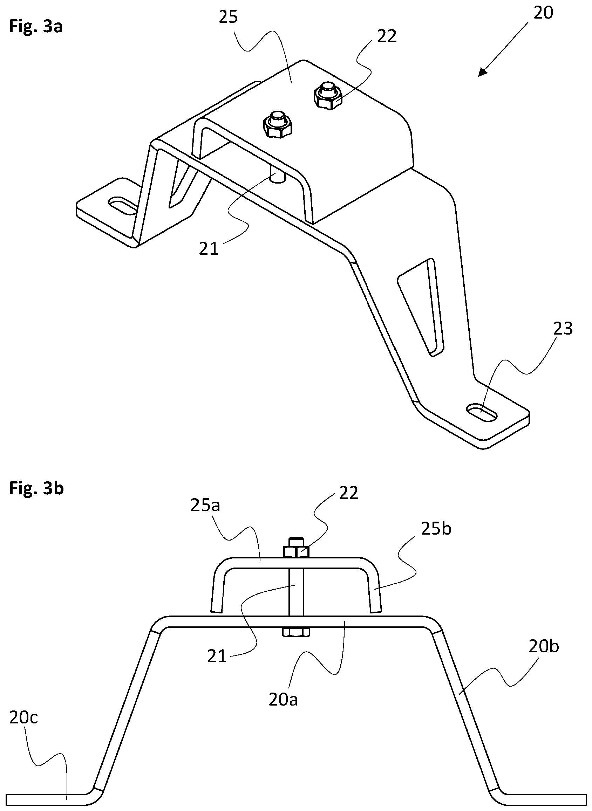

Turning now to Figs. 3a and 3b, a leg member 20 for the adjustable antenna mounting system 1 is shown in a perspective and side view, respectively. The leg member 20 generally has a "hat"-shaped cross section including a top portion 20a and side portions 20b which constitute the legs. The side portions 20b each have a flange 20c including a through-going hole 23 for fastening the leg member 20 to the vehicle roof by means of bolts (not shown). The side portions 20b may be angled slightly outwardly such that the width of the leg member 20 increases from the top portion 20a in the direction towards the flanges 20c. As noted above, the leg members 20 may be dimensioned for the specific mounting conditions on the roof of the vehicle, for instance, to work around obstacles or to adapt to the shape of the roof. In one example, where the roof has a rounded shape, one of the side portions 20b may be longer/shorter than the other such that the beam segment 10 may be installed with the top portion 10a oriented horizontally.

The leg member 20 also comprises a bracket 25 fastened to the top portion 20a by means of bolts 21 and nuts 22. The bracket 25 has a U-shaped cross section including a top portion 25a and side portions 25b. The side portions 25b may be angled slightly outwardly such that the width of the bracket 25 increases in a direction away from the top portion 25a. The same type of bracket can be used for any type of peripheral intended to be mounted on the beam segment 10.

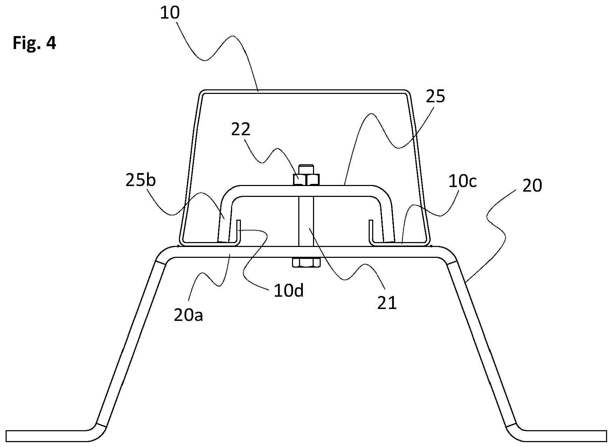

The principle of mounting any type of peripheral on the beam segment 10 can be understood by looking at the profile shown in Fig. 4. Here, the beam segment 10 is shown with a leg member 20 mounted on the underside thereof, i.e. the flanges 10c of the beam segment 10 "rest" on the top portion 20a of the leg member 20. The bracket 25 fixes the leg member 20 to the mounting rail of the beam segment 10, i.e. the inwardly oriented lips 10d and flanges 10c, when the bolts 21 and nuts 22 are tightened. The flanges 10c of the beam segment 10 are clamped between the edges of the side portions 25b of the bracket 25 and the top portion 20a of the leg member 20 to maintain the beam segment 10 firmly in place on the leg member 20.

The width of the top portion 25a of the bracket 25 may be adapted to the distance between the lips 10d such that the side portions 25b of the bracket 25 engage the lips 10d. It is noted that the side portions 25b of the bracket 25 are angled slightly outwardly, the purpose being to make the edges of the side portions 25b of the bracket 25 sink into the metal of the beam segment 10 to achieve a higher degree of firmness in the joint. In order to reposition the leg member 20 on the beam segment 10, the bracket 25 may be loosened (but not removed) to allow sliding of the leg member 20 along the mounting rail of the beam segment 10.

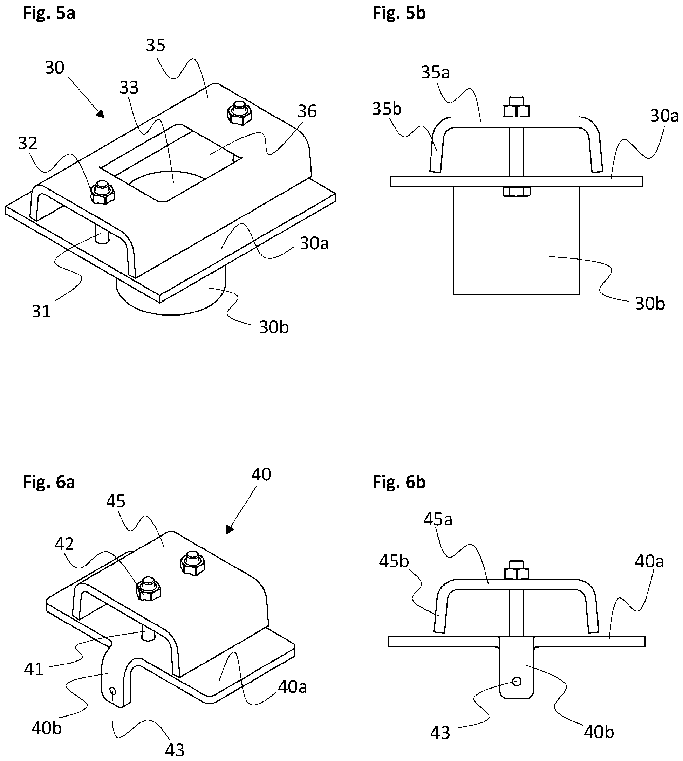

Turning now to Figs. 5a and 5b, a cable routing member 30 for the adjustable antenna mounting system 1 is shown in a perspective and side view, respectively. The cable routing member 30 comprises a top portion 30a in the shape of a rectangular plate with a central through-going hole 33. Further, the cable routing member comprises a bottom portion 30b in the shape of a cylinder attached to the top portion 30a and aligned with the hole 33.

Similar to the leg member 20, the cable routing member 30 also comprises a bracket 35 fastened to the top portion 30a by means of bolts 31 and nuts 32. The bracket 35 has a U-shaped cross section including a top portion 35a and side portions 35b. The bracket 35 comprises a central through-going opening 36 which is aligned with the hole 33 and the cylindrical bottom portion 30b when the bracket 35 is mounted on the top portion 30a to form a passage for cable bundles from the antennas 2. The bottom portion 30b may, of course, be of any suitable shape to provide a cover or feedthrough for protecting the cables routed from the beam segment 10 through the roof of the vehicle.

Turning now to Figs. 6a and 6b, a grounding fixture 40 for the adjustable antenna mounting system 1 is shown in a perspective and side view, respectively. The grounding fixture 40 comprises a top portion 40a in the shape of a rectangular plate and a side portion 40b in the shape of a downwardly oriented projection. The side portion 40b includes a through-going hole 43 for connecting a grounding or earthing wire (not shown) between the adjustable antenna mounting system 1 and the vehicle.

Similar to the leg member 20 and the cable routing member 30, the grounding fixture 40 also comprises a bracket 45 fastened to the top portion 40a by means of bolts 41 and nuts 44. The bracket 45 has a U-shaped cross section including a top portion 45a and side portions 45b.

As will be apparent, the cable routing member 30 and the grounding fixture 40 may be mounted and repositioned on the beam segment 10 by means of their respective brackets 35, 45 in the same way as the leg member 20 described above with reference to Fig. 4.

## Claims

1. An adjustable antenna mounting system (1) for installation of antennas (2) on a surface of a vehicle, the system comprising at least one beam segment (10) adapted to receive at least one antenna (2) for mounting thereon, and at least two leg members (20) each comprising means (23) for fastening the leg member (20) to the vehicle,
**characterised in that**:
the beam segment (10) has a substantially C-shaped cross section, and
each of the at least two leg members (20) is arranged to be removably fastened to the beam segment (10) at any longitudinal position along the length of the beam segment (10) and dimensioned to elevate the beam segment (10) from the surface of the vehicle when the leg members are fastened to the vehicle.

2. The adjustable antenna mounting system according to claim 1, wherein the beam segment (10) cross section terminates in a pair of inwardly oriented lips (10d), and wherein each of the at least two leg members (20) comprises a bracket (25) arranged to engage the lips (10d) of the beam segment (10) when the leg member (20) is fastened to the beam segment (10).

3. The adjustable antenna mounting system (1) according to claim 2, wherein the at least two leg members (20) are slidable along the lips (10d).

4. The adjustable antenna mounting system (1) according to any one of the preceding claims, wherein the leg members (20) comprise a top portion (20a) and a pair of side portions (20b), each terminating in a flange (20c).

5. The adjustable antenna mounting system (1) according to claim 4, wherein one of the side portions (20b) has a dimension different from the other side portion (20b).

6. The adjustable antenna mounting system (1) according to any one of the preceding claims, further comprising at least one cable routing member (30) arranged to be removably fastened to the beam segment (10) at any longitudinal position along the length of the beam segment (10), wherein the at least one cable routing member (30) comprises a bracket (35) arranged to engage the lips (10d) of the beam segment (10) when the at least one cable routing member (30) is fastened to the beam segment (10), wherein the bracket (35) comprises a through-going opening (36) for passage of antenna cables.

7. The adjustable antenna mounting system (1) according to claim 6, wherein the cable routing member (30) comprises a top portion (30a) with a central through-going hole (33) and a bottom portion (30b) aligned with the hole (33), wherein the hole (33) is aligned with the opening (36) of the bracket (35) when the bracket (35) is mounted on the top portion (30a).

8. The adjustable antenna mounting system (1) according to any one of the preceding claims, further comprising at least one grounding fixture (40) arranged to be removably fastened to the beam segment (10) at any longitudinal position along the length of the beam segment (10), wherein the at least one grounding fixture (40) comprises a bracket (45) arranged to engage the lips (10d) of the beam segment (10) when the at least one grounding fixture (40) is fastened to the beam segment (10), wherein the grounding fixture (40) comprises a top portion (40a) and a side portion (40b) including a through-going hole (43) for attachment of a grounding wire.

9. The adjustable antenna mounting system (1) according to any one of claims 2-8, wherein the bracket (25; 35; 45) has a substantially U-shaped cross section including a top portion (25a; 35a; 45a) and two side portions (25b; 35b; 45b), wherein the side portions (25b; 35b; 45b) are angled outwardly with respect to the top portion (25a; 35a; 45a).

10. The adjustable antenna mounting system (1) according to any one of the preceding claims, wherein the beam segment (10) further comprises at least one mounting plate for attachment of cable ties, arranged on an inner surface of the beam segment (10).

11. The adjustable antenna mounting system (1) according to any one of the preceding claims, wherein the beam segment (10) has a length in the range 1 to 3 metres, preferably about 2 metres.

12. The adjustable antenna mounting system (1) according to any one of the preceding claims, wherein the beam segment (10) is arranged to be joined together end-to-end with another beam segment (10).

13. The adjustable antenna mounting system (1) according to any one of the preceding claims, comprising two or more beam segments (10) joined together end-to-end in a longitudinal direction of the beam segments (10).

## Patentansprüche

1. Einstellbares Antennenmontagesystem (1) zum Installieren von Antennen (2) auf einer Oberfläche eines Fahrzeugs, wobei das System mindestens ein Trägersegment (10), das dazu geeignet ist, mindestens eine Antenne (2) aufzunehmen, die an ihm montiert werden soll, und mindestens zwei Schenkelelemente (20) umfasst, die jeweils Mittel (23) zum Befestigen der Schenkelelemente (20) am Fahrzeug umfassen,
**dadurch gekennzeichnet, dass:**
das Trägersegment (10) einen im Wesentlichen C-förmigen Querschnitt aufweist, und
jedes der mindestens zwei Schenkelelemente (20) so eingerichtet ist, dass es an jeder Längsposition entlang der Länge des Trägersegments (10) abnehmbar am Trägersegment (10) befestigt werden kann, und so bemessen ist, dass es das Trägersegment (10) von der Oberfläche des Fahrzeugs abhebt, wenn die Schenkelelemente am Fahrzeug befestigt sind.

2. Einstellbares Antennenmontagesystem nach Anspruch 1, wobei der Querschnitt des Trägersegments (10) in einem Paar nach innen gerichteter Lippen (10d) endet, und wobei jedes der mindestens zwei Schenkelelemente (20) einen Bügel (25) umfasst, der so eingerichtet ist, dass er in die Lippen (10d) des Trägersegments (10) einrückt, wenn das Schenkelelement (20) am Trägersegment (10) befestigt wird.

3. Einstellbares Antennenmontagesystem (1) nach Anspruch 2, wobei die mindestens zwei Schenkelelemente (20) entlang der Lippen (10d) verschoben werden können.

4. Einstellbares Antennenmontagesystem (1) nach einem der vorstehenden Ansprüche, wobei die Schenkelelemente (20) einen oberen Abschnitt (20a) und ein Paar Seitenabschnitte (20b) umfassen, die jeweils in einem Flansch (20c) enden.

5. Einstellbares Antennenmontagesystem (1) nach Anspruch 4, wobei einer der Seitenabschnitte (20b) eine Abmessung aufweist, die sich vom anderen Seitenabschnitt (20b) unterscheidet.

6. Einstellbares Antennenmontagesystem (1) nach einem der vorstehenden Ansprüche, das weiter mindestens ein Kabelführungselement (30) umfasst, das so eingerichtet ist, dass es an jeder Längsposition entlang der Länge des Trägersegments (10) abnehmbar am Trägersegment (10) befestigt werden kann, wobei das mindestens eine Kabelführungselement (30) einen Bügel (35) umfasst, der so eingerichtet ist, dass er in die Lippen (10d) des Trägersegments (10) einrückt, wenn das mindestens eine Kabelführungselement (30) am Trägersegment (10) befestigt wird, wobei der Bügel (35) eine durchgehende Öffnung (36) zum Durchführen von Antennenkabeln umfasst.

7. Einstellbares Antennenmontagesystem (1) nach Anspruch 6, wobei das Kabelführungselement (30) einen oberen Abschnitt (30a) mit einem mittigen, durchgehenden Loch (33), und einen unteren Abschnitt (30b) umfasst, der mit dem Loch (33) fluchtet, wobei das Loch (33) mit der Öffnung (36) des Bügels (35) fluchtet, wenn der Bügel (35) am oberen Abschnitt (30a) montiert ist.

8. Einstellbares Antennenmontagesystem (1) nach einem der vorstehenden Ansprüche, das weiter mindestens eine Erdungshalterung (40) umfasst, die so eingerichtet ist, dass sie an jeder Längsposition entlang der Länge des Trägersegments (10) abnehmbar am Trägersegment (10) befestigt werden kann, wobei die mindestens eine Erdungshalterung (40) einen Bügel (45) umfasst, der so eingerichtet ist, dass er in die Lippen (10d) des Trägersegments (10) einrückt, wenn die mindestens eine Erdungshalterung (40) am Trägersegment (10) befestigt wird, wobei die Erdungshalterung (40) einen oberen Abschnitt (40a) und einen Seitenabschnitt (40b) umfasst, der ein durchgehendes Loch (43) zum Anbringen eines Erdungsdrahtes einschließt.

9. Einstellbares Antennenmontagesystem (1) nach einem der Ansprüche 2-8, wobei der Bügel (25; 35; 45) einen im Wesentlichen U-förmigen Querschnitt aufweist, der einen oberen Abschnitt (25a; 35a; 45a) und zwei Seitenabschnitte (25b; 35b; 45b) einschließt, wobei die Seitenabschnitte (25b; 35b; 45b) in Bezug auf den oberen Abschnitt (25a; 35a; 45a) nach außen abgewinkelt sind.

10. Einstellbares Antennenmontagesystem (1) nach einem der vorstehenden Ansprüche, wobei das Trägersegment (10) weiter mindestens eine Montageplatte zum Anbringen von Kabelbindern umfasst, die an einer Innenfläche des Trägersegments (10) eingerichtet ist.

11. Einstellbares Antennenmontagesystem (1) nach einem der vorstehenden Ansprüche, wobei das Trägersegment (10) eine Länge im Bereich von 1 bis 3 Metern, vorzugsweise etwa 2 Metern, aufweist.

12. Einstellbares Antennenmontagesystem (1) nach einem der vorstehenden Ansprüche, wobei das Trägersegment (10) so eingerichtet ist, dass es Ende an Ende mit einem anderen Trägersegment (10) zusammengefügt werden kann.

13. Einstellbares Antennenmontagesystem (1) nach einem der vorstehenden Ansprüche, das zwei oder mehr Trägersegmente (10) umfasst, die in einer Längsrichtung des Trägersegments (10) Ende an Ende zusammengefügt sind.

## Revendications

1. Système de montage d'antenne réglable (1) pour une installation d'antennes (2) sur une surface d'un véhicule, le système comprenant au moins un segment de poutre (10) conçu pour recevoir au moins une antenne (2) pour un montage sur celui-ci, et au moins deux éléments de patte (20) comprenant chacun des moyens (23) pour fixer l'élément de patte (20) au véhicule, **caractérisé en ce que** :
le segment de poutre (10) présente une section transversale sensiblement en forme de C et chacun des au moins deux segments de patte (20) est agencé pour être fixé de manière amovible au segment de poutre (10) à n'importe quelle position longitudinale le long de la longueur du segment de poutre (10) et dimensionné pour élever le segment de poutre (10) depuis la surface du véhicule lorsque les segments de patte sont fixés au véhicule.

2. Système de montage d'antenne réglable selon la revendication 1, dans lequel la section transversale du segment de poutre (10) se termine par une paire de lèvres (10d) orientées vers l'intérieur, et dans lequel chacun des au moins deux éléments de patte (20) comprend un support (25) agencé pour venir en prise avec les lèvres (10d) du segment de poutre (10) lorsque l'élément de patte (20) est fixé au segment de poutre (10).

3. Système de montage d'antenne réglable (1) selon la revendication 2, dans lequel les au moins deux éléments de patte (20) peuvent coulisser le long des lèvres (10d).

4. Système de montage d'antenne réglable (1) selon l'une quelconque des revendications précédentes, dans lequel les éléments de patte (20) comprennent une partie supérieure (20a) et une paire de parties latérales (20b), chacune se terminant par une bride (20c).

5. Système de montage d'antenne réglable (1) selon la revendication 4, dans lequel l'une des parties latérales (20b) présente une dimension différente de celle de l'autre partie latérale (20b).

6. Système de montage d'antenne réglable (1) selon l'une quelconque des revendications précédentes, comprenant en outre au moins un élément d'acheminement de câble (30) agencé pour être fixé de manière amovible au segment de poutre (10) à n'importe quelle position longitudinale le long de la longueur du segment de poutre (10), dans lequel le au moins un élément d'acheminement de câble (30) comprend un support (35) agencé pour venir en prise avec les lèvres (10d) du segment de poutre (10) lorsque le au moins un élément d'acheminement de câble (30) est fixé au segment de poutre (10), dans lequel le support (35) comprend une ouverture traversante (36) pour le passage de câbles d'antenne.

7. Système de montage d'antenne réglable (1) selon la revendication 6, dans lequel l'élément d'acheminement de câble (30) comprend une partie supérieure (30a) présentant un trou traversant central (33) et une partie inférieure (30b) alignée sur le trou (33), dans lequel le trou (33) est aligné sur l'ouverture (36) du support (35) lorsque le support (35) est monté sur la partie supérieure (30a).

8. Système de montage d'antenne réglable (1) selon l'une quelconque des revendications précédentes, comprenant en outre au moins une armature de mise à la terre (40) agencée pour être fixée de manière amovible au segment de poutre (10) à n'importe quelle position longitudinale le long de la longueur du segment de poutre (10), dans lequel la au moins une armature de mise à la terre (40) comprend un support (45) agencé pour venir en prise avec les lèvres (10d) du segment de poutre (10) lorsque la au moins une armature de mise à la terre (40) est fixée au segment de poutre (10), dans lequel la armature de mise à la terre (40) comprend une partie supérieure (40a) et une partie latérale (40b) incluant un trou traversant (43) pour la fixation d'un fil de mise à la terre.

9. Système de montage d'antenne réglable (1) selon l'une quelconque des revendications 2-8, dans lequel le support (25 ; 35 ; 45) présente une section transversale sensiblement en forme de U incluant une partie supérieure (25a ; 35a ; 45a) et deux parties latérales (25b ; 35b ; 45b), dans lequel les parties latérales (25b ; 35b ; 45b) sont inclinées vers l'extérieur par rapport à la partie supérieure (25a ; 35a ; 45a).

10. Système de montage d'antenne réglable (1) selon l'une quelconque des revendications précédentes, dans lequel le segment de poutre (10) comprend en outre au moins une plaque de montage pour la fixation d'attaches de câble, agencée sur une surface interne du segment de poutre (10).

11. Système de montage d'antenne réglable (1) selon l'une quelconque des revendications précédentes, dans lequel le segment de poutre (10) présente une longueur dans la plage de 1 à 3 mètres, de préférence environ 2 mètres.

12. Système de montage d'antenne réglable (1) selon l'une quelconque des revendications précédentes, dans lequel le segment de poutre (10) est agencé pour être uni ensemble bout à bout à un autre segment de poutre (10).

13. Système de montage d'antenne réglable (1) selon l'une quelconque des revendications précédentes, comprenant deux, ou plus, segments de poutre (10) uni ensemble bout à bout dans la direction longitudinale des segments de poutre (10).
